Europäisches Patentamt

European Patent Office

Office européen des brevets

(19)

(11) **EP 1 085 499 B1**

(12) **EUROPÄISCHE PATENTSCHRIFT**

(45) Veröffentlichungstag und Bekanntmachung des Hinweises auf die Patenterteilung:
**27.12.2006 Patentblatt 2006/52**

(51) Int Cl.:
***G10L 15/08*** *(2006.01)*    ***G10L 15/12*** *(2006.01)*

(21) Anmeldenummer: **00203161.5**

(22) Anmeldetag: **13.09.2000**

(54) **Erkennung einer in buchstabierter Form vorliegenden Sprachäusserungseingabe**

Spelled mode speech recognition

Reconnaissance vocale d'une expression épellée

(84) Benannte Vertragsstaaten:
**DE FR GB**

(30) Priorität: **17.09.1999 DE 19944608**

(43) Veröffentlichungstag der Anmeldung:
**21.03.2001 Patentblatt 2001/12**

(73) Patentinhaber:
• **Philips Intellectual Property & Standards GmbH 20099 Hamburg (DE)**
Benannte Vertragsstaaten:
**DE**
• **Koninklijke Philips Electronics N.V. 5621 BA Eindhoven (NL)**
Benannte Vertragsstaaten:
**FR GB**

(72) Erfinder:
• **Stahl, Volker, Dr., Philips Corporate 52064 Aachen (DE)**
• **Fischer, Alexander, Dr., Philips Corporate 52064 Aachen (DE)**

(74) Vertreter: **Volmer, Georg et al Philips Intellectual Property & Standards GmbH, Postfach 50 04 42 52088 Aachen (DE)**

(56) Entgegenhaltungen:
**EP-A- 0 389 271**

• **SOONG F K ET AL: "A tree-trellis based fast search for finding the N-best sentence hypotheses in continuous speech recognition" SPEECH PROCESSING 2, VLSI, UNDERWATER SIGNAL PROCESSING. TORONTO, MAY 14 - 17, 1991, INTERNATIONAL CONFERENCE ON ACOUSTICS, SPEECH & SIGNAL PROCESSING. ICASSP, NEW YORK, IEEE, US, Bd. 2 CONF. 16, 14. April 1991 (1991-04-14), Seiten 705-708, XP010043073 ISBN: 0-7803-0003-3**
• **NEY H ET AL: "Progress in dynamic programming search for LVCSR" AUTOMATIC SPEECH RECOGNITION AND UNDERSTANDING, 1997. PROCEEDINGS., 1997 IEEE WORKSHOP ON SANTA BARBARA, CA, USA 14-17 DEC. 1997, NEW YORK, NY, USA,IEEE, US, 14. Dezember 1997 (1997-12-14), Seiten 287-294, XP010267522 ISBN: 0-7803-3698-4**
• **JUNQUA J-C ET AL: "An N-best strategy, dynamic grammars and selectively trained neural networks for real-time recognition of continuously spelled names over the telephone" ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA, IEEE, US, 9. Mai 1995 (1995-05-09), Seiten 852-855, XP010151352 ISBN: 0-7803-2431-5**

**Beschreibung**

Die Erfindung betrifft ein Verfahren zur Erkennung einer in buchstabierter Form vorliegenden Sprachäußerungseingabe mit einer ersten Verarbeitungsstufe, in der mittels einer auf Hidden Markov Modellen basierenden Buchstaben-Spracherkennungseinheit eine korrespondierende Buchstabenfolge geschätzt wird, und mit einer zweiten Verarbeitungsstufe, in der unter Verwendung eines aus dem Vokabular abgeleiteten statistischen Buchstabenfolgemodells und eines statistischen Modells für die Spracherkennungseinheit das von der ersten Verarbeitungsstufe gelieferte Schätzergebnis nachverarbeitet wird, wobei bei der Nachverarbeitung die Methode der dynamischen Programmierung eingesetzt wird.

Ein solches Verfahren ist beispielsweise aus der US 5,799,065 im Rahmen der automatischen Herstellung von Telefonverbindungen durch Spracheingaben bekannt. Ein Anrufer gibt dabei nach entsprechender Aufforderung den Namen des gewünschten anzurufenden anderen Teilnehmers in kontinuierlich buchstabierter Form ein. Die Eingabe wird einer auf HMM (Hidden Markov Model) verwendenden Spracherkennungseinheit weiterverarbeitet, wobei auch eine auf Buchstaben-n-Grammen beruhende Buchstabengrammatik zum Einsatz kommt. Es werden N beste Worthypothesen ermittelt, die nach der Methode des dynamischen Programmierens (DP) weiterverarbeitet werden, wobei die ermittelten Hypothesen mit dem Inhalt eines Namenslexikons verglichen werden. Die von der DP-Einheit gelieferten N besten Worthypothesen werden als dynamische Grammatik verwendet, die von einer weiteren Spracherkennungseinheit verwendet wird, die aus den von der DP-Einheit gelieferten Worthypothesen eine als - dem eingegebenen Namen entsprechendes - Erkennungsergebnis auswählt.

Bei Navigationssystemen für Landkraftfahrzeuge ist es ebenfalls bekannt, Eingaben mittels Sprachäußerungen zu tätigen. Auf diese Weise werden beispielsweise Ortsnamen als Zielorte eingegeben. Um die Zuverlässigkeit der Spracherkennung zu verbessern, ist neben einer Wort-Spracherkennung, bei der eine Eingabe von natürlich gesprochenen Worten vorgesehen, außerdem eine Buchstaben-Spracherkennung vorgesehen, die zur Erkennung buchstabierter Spracheingaben dient.

Der Erfindung liegt nun die Aufgabe zugrunde, robuste und effiziente Spracherkennungsprozeduren für die Anwendung von Sprachsignalen zur Systemsteuerung unter Anwendung einer Buchstaben-Spracherkennung anzugeben.

Die Erfindung betrifft ein Verfahren gemäß Anspruch 1.

Die Aufgabe wird dadurch gelöst, dass die der dynamischen Programmierung zugrundeliegende Gitterstruktur, deren Knotenpunkte zur Zuordnung zu akkumulierten Wahrscheinlichkeitswerten vorgesehen sind, in eine Baumstruktur umgesetzt wird und dass bei der Suche nach einem optimalen Baumpfad der A'-Algorithmus eingesetzt wird. Dieser Ansatz führt zu einer beschleunigten Buchstabenspracherkennung mit verringertem Speicherplatzbedarf.

In einer Ausgestaltung ist vorgesehen, dass suboptimale Baumpfade entsprechend N bester Schätzungen für die Sprachäußerungseingabe mit N> 1 ermittelt werden. Damit stehen Erkennungsalternativen für eine Weiterverarbeitung zur Verfügung, so dass ein Fehler bei der Ermittlung des optimalen Baumpfades in nachfolgenden Verarbeitungsschritten unter Zuhilfenahme der suboptimalen Erkennungsergebnisse leichter korrigierbar ist.

Eine weitere Ersparnis an Rechenzeit wird dadurch erreicht, dass bei der Suche nach einem optimalen Baumpfad diejenigen Baumpfade, die schon zu Beginn der Suche eine gegenüber anderen Baumpfaden eine kleine Wahrscheinlichkeit aufweisen, vorrangig nicht mehr weiterverfolgt werden.

Es wird weiterhin vorgeschlagen, dass die erste Verarbeitungsstufe mittels eines ersten ICs und die zweite Verarbeitungsstufe mittels eines zweiten ICs durchgeführt wird. Der erste IC (integriete Schaltkreis) ist vorzugsweise ein speziell für Spracherkennungsprozeduren programmierte digitaler Signalprozessor. Der zweite IC kann insbesondere ein Controller-Baustein sein, der auch zur Realisierung anderer Systemfunktionen eingesetzt wird.

Die Erfindung betrifft auch ein Verfahren gemäß Anspruch 5 zur Systemsteuerung mittels Sprachsignalen, bei dem

- eine Eingabe eines als Steuersignal dienenden ganzen Wortes und eine Eingabe wenigstens eines Teils dieses Wortes in buchstabierter Form vorgesehen ist,
- eine Wort-Spracherkennung zur Erkennung des eingegebenen ganzen Wortes vorgesehen ist,
- eine Buchstaben-Spracherkennung, insbesondere wie oben beschrieben, zur Erkennung des eingegebenen buchstabierten Teils des ganzen Wortes vorgesehen ist und
- bei dem mit Hilfe des Erkennungsergebnisses der Buchstaben-Spracherkennung eine Einschränkung eines der Wort-Spracherkennung zugeordneten Vokabulars durchgeführt wird.

Ein solches Verfahren führt auch für schwierige Rahmenbedingungen wie beispielsweise einem hohen Störgeräuschpegel in Kraftfahrzeugen oder undeutlicher Sprechweise eines Benutzers zu einer zuverlässigen Sprachsteuerung.

Die Erfindung betrifft auch ein sprachgesteuertes elektrisches Gerät gemäß Anspruch 6 insbesondere ein Navigationssystem für Landkraftfahrzeuge, mit Komponenten zur Durchführung eines der oben beschriebenen Verfahren.

Ausführungsbeispiele der Erfindung werden nachfolgend unter anderem anhand der Zeichnungen näher erläutert. Es zeigen:

Fig. 1    eine Baumstruktur zur Erläuterung zum statistischen Modell einer Buchstabenfolge,

Fig. 2    ein Beispiel für einen Gitterpfad,

Fig. 3    eine Baumstruktur, deren Baumknoten Spalten eines DP-Gitters entsprechen,

Fig. 4    ein Blockschaltbild eines Systems zur Erkennung buchstabierter Sprachäußerungen und

Fig. 5    ein Blockschaltbild eines Systems mit Sprachsteuerung durch Eingabe von Worten und buchstabierter sprachlicher Äußerungen.

Eine bevorzugte Anwendung der Erfindung ist ein Navigationssystem für Kraftfahrzeuge mit einer Sprachsteuerung. Die automatische Spracherkennung für die Sprachsteuerung ist hier schwierig, da das zu erkennende Vokabular (z. B. einige zehntausend Städtenamen) umfangreich ist und die akustischen Bedingungen in Kraftfahrzeugen aufgrund zahlreicher auftretender Störgeräusche als ungünstig beurteilt werden müssen. Weiterhin ist davon auszugehen, dass die verfügbare Hardware in Navigationssystemen in Anbetracht der Komplexität von Spracherkennungsprozeduren nur eine sehr beschränkte Verarbeitungskapazität und einen relativ kleinen Arbeitsspeicher aufweist. Die Erfindung ist allerdings nicht auf die Anwendung in Navigationssystemen für Kraftfahrzeuge beschränkt, sondern in allen Geräte mit Sprachsteuerung und ähnlich gelagerten Randbedingungen geeignet.

Beim vorliegenden Navigationssystem wird ein Benutzer im Spracherkennungsmodus zur Spracheingabe aufgefordert, z. B. zur Eingabe eines Städtenamens, und zwar jeweils sowohl zur Eingabe durch Sprechen eines ganzen Wortes als auch zusätzlich zur Eingabe durch (kontinuierliches) Buchstabieren wenigstens eines Teils des eingegebenen Wortes. Es wird in zwei ersten Verarbeitungsstufen sowohl eine auf dem vorgegebenen Vokabular basierende Wort-Spracherkennung als auch eine Buchstaben-Spracherkennung durchgeführt. Bei der Buchstaben-Spracherkennung wird dem Benutzer die Anzahl einzugebender Buchstaben pro Wort nicht vorgegeben. Mit dem Spracherkennungsergebnis bezüglich der eingegebenen Einzelbuchstaben können die Worte des vorgegebenen Vokabulars ermittelt werden, die als Wort-Spracherkennunsergebnis in Frage kommen. Basierend auf dem sich hieraus ergebenden eingeschränkten Vokabular wird in einer weiteren Verarbeitungsstufe für das eingegebene Wort erneut eine Wort-Spracherkennung durchgeführt.

Im folgenden soll die Buchstaben-Spracherkennung näher erläutert werden. Bei dieser ist regelmäßig, insbesondere in Umgebungen mit erheblichen Störgeräuschen wie innerhalb von Kraftfahrzeugen, mit hohen Fehlerraten zu rechnen. Einer Verbesserung dieser Fehlerrate durch Berücksichtigung des Vokabulars bei der akustischen Suche des Buchstaben-Spracherkenners stößt auf das Problem, dass übliche Spracherkenner-ICs nicht genügend Speicher zur Speicherung der aus einem großen Vokabular resultierenden Datenmengen enthalten. Bei dem vorliegenden Navigationssystem wird aus diesem Grund die Buchstaben-Spracherkennung in zwei voneinander unabhängigen Verarbeitungsstufen durchgeführt. In der ersten Verarbeitungsstufe werden die eingegebenen Buchstaben mittels eines üblichen Buchstaben-Spracherkenners ohne Berücksichtigung eines Vokabulars durchgeführt. Diese Verarbeitungsstufe wird mittels eines speziell hierfür ausgelegten und programmierten Spracherkenner-ICs durchgeführt. In der zweiten Verarbeitungsstufe wird eine Nachverarbeitung durchgeführt. Diese wird mittels des Controllers durchgeführt, der zur Umsetzung der anderen Systemfunktionen (d.h. hier der speziellen Navigationsfunktionen) dient und der auf ausreichend Speicherplatz zugreifen kann.

Für die Nachverarbeitung stehen zusätzliche Informationen bezüglich verschiedener möglicher Buchstabenfolgen zur Verfügung, insbesondere - wie im vorliegenden Ausführungsbeispiel - eine Liste mit zulässigen Buchstabenfolgen, d.h. Buchstabenfolgen, mit denen jeweils mindestens ein Wort des Vokabulars beginnt, und statististische Informationen bezüglich solcher Buchstabenfolgen, z.B. bedingte Wahrscheinlichkeiten (wie beispielsweise die Wahrscheinlichkeit, dass beim dritten Buchstaben C eines Wortes die beiden ersten Buchstaben jeweils ein A waren). Als weitere die Fehlerrate reduzierende statistische Informationen kommen auch Wahrscheinlichkeiten für Verwechslungen zwischen zwei Buchstaben (N und M sind z. B. einander ähnlich und haben deshalb eine hohe Verwechslungswahrscheinlichkeit) oder Wahrscheinlichkeiten bzgl. eines versehentlichen Einfügens oder Auslassens eines Buchstabens in Betracht.

Das der Nachverarbeitung zugrundeliegende Problem lässt sich wie folgt formulieren:

Gegeben sind:

- ein statistisches Modell des Buchstaben-Spracherkenners (d.h. Wahrscheinlichkeiten von Erkennungsfehlern);
- ein statistisches Modell der gesprochenen Buchstabenfolge und
- eine Folge erkannter Buchstaben.

Gesucht ist:

Die Buchstabenfolge mit der größten Wahrscheinlichkeit, die gesprochene Buchstabenfolge zu sein.

Im folgenden wird $\Sigma$ als Symbol für eine Buchstabenmenge bezeichnet.

Eine gesprochene (und in den Spracherkenner eingegebene) Buchstabenfolge $\underline{s}$ der Länge n (mit Buchstaben $s_i$) und eine erkannte Buchstabenfolge $\underline{r}$ der Länge m (mit Buchstaben $r_i$) werden beschrieben durch:

$$\underline{s} = (s_1, s_2, ..., s_n) \text{ mit } s_i \in \Sigma$$

$$\underline{r} = (r_1, r_2, ..., r_m) \text{ mit } r_i \in \Sigma$$

Die Buchstabenfolgen sind zur Unterscheidung gegenüber Einzelbuchstaben unterstrichen dargestellt. Unterschiedliche Längen n und m können sich dadurch ergeben, dass der verwendete Spracherkenner fehlerhaft Buchstaben ins Erkennungsergebnis einfügt oder auch fehlerhaft Buchstaben weglässt.

Gesucht ist nun die Buchstabenfolge $\underline{s}$, bei der bei gegebener Buchstabenfolge $\underline{r}$ die Wahrscheinlichkeit

$$P(\underline{s} \mid \underline{r}) = \frac{P(\underline{r} \mid \underline{s}) P(\underline{s})}{P(\underline{r})}$$

maximal ist. Da das Wahrscheinlichkeitsmaximum von P($\underline{r}$) unabhängig ist, ist nach der Buchstabenfolge $\underline{s}$ zu suchen, die den Ausdruck

$$P(\underline{r} \mid \underline{s}) \, P(\underline{s})$$

maximiert. Der Wahrscheinlichkeitsterm P($\underline{r} \mid \underline{s}$) beschreibt die Spracherkennereigenschaften (durch die Wahrscheinlichkeit für eine Folge erkannter Buchstaben $\underline{r}$ gegeben eine Folge gesprochener Buchstaben $\underline{s}$), der Wahrscheinlichkeitsterm P($\underline{s}$) dagegen die Auftrittswahrscheinlichkeiten von gesprochenen Buchstabenfolgen $\underline{s}$ (entsprechend einem Sprachmodell, das berücksichtigt, dass nicht alle Buchstabenkombinationen gleich wahrscheinlich sind).

Zur Berechnung des Maximums des Ausdrucks P($\underline{r} \mid \underline{s}$) P($\underline{s}$) soll ein effizienter Algorithmus angegeben werden. Hierzu werden vereinfachende Annahmen bezüglich der beiden Wahrscheinlichkeitsfunktionen P($\underline{r} \mid \underline{s}$) und P($\underline{s}$) gemacht, um so geeignete statistische Modelle für den Spracherkenner und die gesprochene Buchstabenfolge zu erhalten. Im folgenden wird das statistische Modell für P($\underline{r} \mid \underline{s}$) mit $P_R(\underline{r} \mid \underline{s})$ und das statistische Modell für P($\underline{s}$) mit $P_S(\underline{s})$ bezeichnet.

Als (aus dem vorgegebenen Vokabular abgeleitetes) **statistisches Modell für die gesprochene Buchstabenfolge** wird nun der Ausdruck

$$P_S(s_{i+1} \mid s_1, ..., s_i)$$

angesetzt, der die Wahrscheinlichkeit dafür angibt, dass auf eine Folge von i gesprochenen Buchstaben $s_1,..., s_i$ als nächster gesprochener Buchstabe $s_{i+1}$ folgt. Die Wahrscheinlichkeit, dass sprachliche Äußerung nach den Buchstaben $s_1,..., s_i$ endet, ist gegeben durch

$$P_S(\$ \mid s_1, ..., s_i) = 1 - \sum_{s_{i+1} \in \Sigma} P_S(s_{i+1} \mid s_1, ..., s_i) \, ,$$

wobei \$ das Ende einer Buchstabenfolge bezeichnet. Derartige Wahrscheinlichkeiten können leicht aus einem gegebenen Vokabular und a priori Wahrscheinlichkeiten für die Wörter des Vokabulars geschätzt werden. Dementsprechend lässt sich die Wahrscheinlichkeit für eine Folge gesprochener Buchstaben $\underline{s} = (s_1, s_2, ..., s_n)$ angeben durch

$$P_S(\underline{s}) = P_S(s_1 \mid \#) \; P_S(s_2 \mid s_1) \; ... \; P_S(s_n \mid s_1, ..., s_{n-1}) \; P_S(\$ \mid s_1, ..., s_n) \; ,$$

wobei das Zeichen # den Beginn einer Buchstabenfolge bezeichnet. Weiterhin wird ein begrenztes Vokabular V mit

$$V = \{ \; \underline{s} \mid P_S(\underline{s}) \neq 0 \; \}$$

vorausgesetzt. Für den Fall, dass eine Buchstabenfolge $\underline{s}$ Element des Vokabulars V ist, ist auch jedes Präfix von $\underline{s}$ (d.h. eine Folge von einem oder mehreren aufeinanderfolgenden Buchstaben, mit denen die Buchstabenfolge $\underline{s}$ beginnt) Element des Vokabulars V. Dadurch kann der Benutzer eine beliebig lange Anfangsbuchstabenkette des zu buchstabierenden Wortes sprechen und muss das Wort nicht vollständig buchstabieren. Durch entsprechende Wahl von $P_S$ kann a-priori-Wissen über die Wahrscheinlichkeit ausgenutzt werden, wie viele Buchstaben ein Benutzer voraussichtlich bei der Eingabe im Buchstabiermodus sprechen wird.

Die verschiedenen Wahrscheinlichkeiten $P_s$ eines Vokabulars V lassen sich mit Hilfe einer Baumstruktur auf einfache Weise darstellen. Dabei wird einer Baumkante jeweils ein Buchstabe und der zugehörige Wahrscheinlichkeitswert zugeordnet. Jeder gesprochenen Buchstabenfolge entspricht dann ein Baumknoten, wobei sich die Wahrscheinlichkeit der Buchstabenfolge aus dem Produkt derjenigen Wahrscheinlichkeiten ergibt, die den von der Baumwurzel bis zum betreffenden Baumknoten führenden Baumkanten zugeordnet sind.

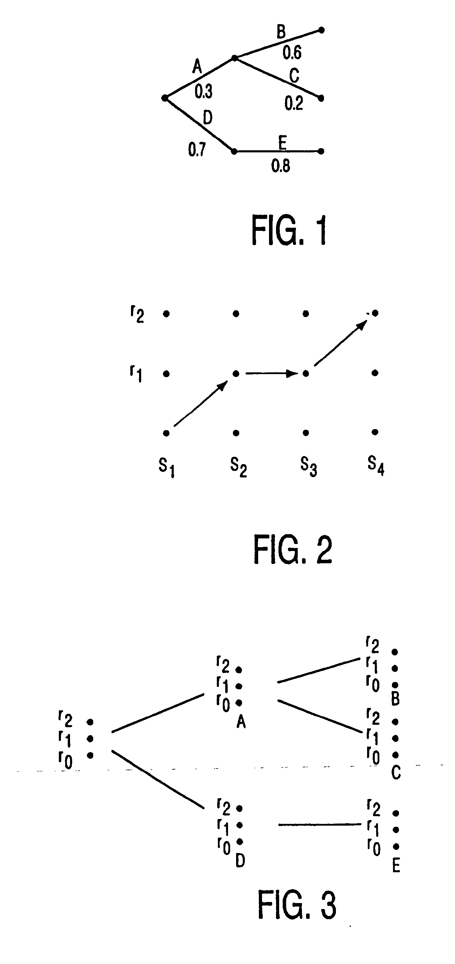

Ein Beispiel für eine derartige Baumstruktur zeigt Fig. 1. Hier sind zur Bildung des Vokabulars vereinfacht als mögliche Buchstaben A, B, C, D und E vorausgesetzt, die jeweils zusammen mit der zugehörigen Auftrittswahrscheinlichkeit einer Baumkante zugeordnet sind. Dementsprechend ergeben sich für die Buchstabenfolgen AB, AC undDE die Wahrscheinlichkeitswerte $P_S(AB)=0,18$ , $P_S(AC)=0,06$ und $P_S(DE)=0,56$ als Produkt der den einzelnen Buchstaben der Buchstabenfolgen jeweils zugeordneten Wahrscheinlichkeitswerten. Unter der Bedingung, dass die Wahrscheinlichkeit des Erreichens eines Endes $ einer Buchstabenfolge schon vor dem Durchlauf eines ganzen Baumpfades mit $P_s(\$)= 0,2$ angesetzt wird, ergeben sich weiterhin die Wahrscheinlichkeitswerte $P_S(A)=0,06$ und $P_S(D)=0,14$ durch Multiplikation von $P_S(\$)$ mit den den Buchstaben A und D bzw. den zugehörigen Baumkanten zugeordneten Wahrscheinlichkeiten. Die Summe der Wahrscheinlichkeitswerte $P_S$ ergibt sich zu Eins.

Um ein einfaches **statistisches Modell für den Buchstaben-Spracherkenner** (genauer gesagt: für die Erkennungsfehler des Buchstaben-Spracherkenners) zu erhalten, wird vorausgesetzt, dass die gesprochenen Buchstaben unkorreliert sind und lediglich die Korrelationen zwischen einem erkannten und einem gesprochenen Buchstaben berücksichtigt werden. Das statistische Modell für den Buchstaben-Spracherkenner liefert die Wahrscheinlichkeit, dass ein Buchstabe r erkannt und ein Buchstabe s gesprochen wurde (mit r, s $\in \Sigma$). Weiterhin werden bei diesem Modell Wahrscheinlichkeiten für Einfügungen von Buchstaben r ohne korrespondierenden gesprochenen Buchstaben s und Wahrscheinlichkeiten für Löschungen von Buchstaben (kein erkannter Buchstabe r für den Fall eines gesprochenen Buchstabens s) angesetzt. Zur Beschreibung dieser Fälle wird ein virtueller Buchstabe $\varepsilon \notin \Sigma$ eingeführt, der sowohl zur Bezeichnung eines nicht gesprochenen als auch zur Bezeichnung eines nicht erkannten Buchstabens dient. Demgemäß ergibt sich für das statistische Modell des Buchstaben-Spracherkenners zu

$$P_R(r, s) \text{ mit } r, s \in \Sigma \cup \{\varepsilon\} \; .$$

Diese Verbund-Wahrscheinlichkeiten werden als Elemente einer Matrix ("confusion matrix") aufgefasst, wobei die verschiedenen Buchstaben r und s den einzelnen Zeilen bzw. Spalten der Matrix bezeichnen. Ausgehend von dieser als gegeben vorausgesetzten und in gespeicherter Form vorliegenden Matrix werden bedingte Wahrscheinlichkeiten P($r \mid \underline{s}$) für eine erkannte Buchstabenfolge $\underline{r}$ und eine gesprochene Buchstabenfolge $\underline{s}$ berechnet, was nachstehend noch näher erläutert wird.

Um mögliche zeitliche Verläufe von Zuordnungen von Buchstabenfolgen $\underline{r}$ und $\underline{s}$ darzustellen, wird ein zweidimensionales Gitter benutzt, das in vertikaler Richtung m+1 Punkte und in horizontaler Richtung n+1 Punkte aufweist, die jeweils mit einem $r_i$ und einem $s_i$ bezeichnet sind. Die 0-te Zeile und 0-te Spalte bleiben dabei unbezeichnet. Der zeitliche Verlauf einer Zuordnung einer bestimmten Buchstabenfolge $\underline{r}$ zu einer bestimmten Buchstabenfolge $\underline{s}$ entspricht einem Pfad durch ein solches Gitter, der durch eine Folge $\pi$ von Koordinatenpaaren

$$\pi = (\sigma_1, \rho_1), (\sigma_2, \rho_2), ..., (\sigma_k, \rho_k)$$

mit

$$\sigma_1 = \rho_1 = 0 ;$$

$$(\sigma_{i+1}, \rho_{i+1}) \in \{(\sigma_i, \rho_i + 1), (\sigma_i + 1, \rho_{i+1}) (\sigma_i + 1, \rho_i + 1)\} ;$$

$$\sigma_i \leq n, \ \rho_i \leq m \ .$$

Ein Pfadsegment $(\sigma_{i-1}, \rho_{i-1}) \rightarrow (\sigma_i, \rho_i)$, bei dem sowohl die $\sigma$-Koordinate als auch die $\rho$-Koordinate inkrementiert worden sind, impliziert, dass ein Buchstabe $s_{\sigma i}$ gesprochen und ein Buchstabe $r_{\rho i}$ erkannt wurde. Ist bei einem Pfad-segment jedoch die $\sigma$-Koordinate konstant, dann wurde zwar ein Buchstabe $r_{\rho i}$ erkannt, aber kein Buchstabe gesprochen, was dem fehlerhaften Einfügen eines Buchstaben durch den Buchstaben-Spracherkenner entspricht. Ist die $\rho$-Koordinate konstant, wurde zwar ein Buchstabe $s_{\sigma i}$ gesprochen, jedoch kein vom Spracherkenner kein korrespondierender Buchstabe erkannt (Löschfehler).

Fig. 2 zeigt beispielhaft einen Ausschnitt aus einer derartigen Gitterstruktur mit einem eingezeichneten Pfad $\pi$. Es wurden drei Buchstaben $s_1$, $s_2$ und $s_3$ gesprochen und zwei Buchstaben $r_1$ und $r_2$ erkannt. Der Buchstabe $r_1$ wurde als Buchstabe $s_1$ erkannt. Der Buchstabe $s_2$ wurde nicht erkannt (d.h. gelöscht). Der Buchstabe $s_3$ wurde schließlich als Buchstabe $r_2$ erkannt.

Allgemein ergibt sich die Wahrscheinlichkeit $P_R$ für eine gesprochene Buchstabenfolge $\underline{s}$, eine erkannte Buch-stabenfolge $\underline{r}$ und einen Gitterpfad $\pi$ gemäß

$$P_R(\underline{r}|\underline{s}) = \sum_{\pi} \prod_{i=1}^{|\pi|} \begin{cases} P_R(r_{\rho_i} | s_{\sigma_i}) & \text{falls} \ \rho_i \neq \rho_{i-1} \ \text{und} \ \sigma_i \neq \sigma_{i-1} \\ P_R(\varepsilon | s_{\sigma_i}) & \text{falls} \ \rho_i = \rho_{i-1} \ \text{und} \ \sigma_i \neq \sigma_{i-1} \\ P_R(r_{\rho_i}, \varepsilon) & \text{falls} \ \rho_i \neq \rho_{i-1} \ \text{und} \ \sigma_i = \sigma_{i-1} \end{cases}$$

Dabei wird in der dritten Zeile für den Fall, dass zwar ein Buchstabe erkannt wurde, aber kein entsprechender gesprochener Buchstabe vorliegt, eine Verbundwahrscheinlichkeit anstelle einer bedingten Wahrscheinlichkeit (wie in den beiden oberen Zeilen) für $P_R$ angesetzt.

Zusammenfassend stellt sich das der Buchstaben-Spracherkennung zugrundeliegende Problem somit so dar, dass diejenige gesprochene Buchstabenfolge $\underline{s} \in V$ zu ermitteln ist, die bei einer gegebenen erkannten Buchstabenfolge $\underline{r}$ die Funktion $f(\underline{s})$ mit

$$f(\underline{s}) = P_R(\underline{r} | \underline{s}) \, P_S(\underline{s})$$

maximiert.

Eine Verbesserung der Buchstaben-Spracherkennung ergibt sich bei der Verwendung eines Buchstaben-Spracherkenners, der nicht nur einzelne Buchstaben als Hypothesen für jeweils einen gesprochenen Buchstaben ausgibt, sondern eine Liste N bester Buchstabenhypothesen (N > 1), die jeweils mit einem Wahrscheinlichkeitswert gewichtet sind. Diese erweiterte Ergebnisinformation kann völlig analog zu den obigen Ausführungen verarbeitet werden (also Verarbeitung ebenfalls ausgehend von einer Matrix und einer Gitterstruktur), was zu einer verbesserten Erkennungsfehlerrate führt.

Im folgenden soll die Nachverarbeitung beschreiben werden, durch die das oben genannte Problem der Ma-ximierung von $f(\underline{s})$ gelöst wird.

Im folgenden sei $\Sigma$ ein vorgegebenes Alphabet, $V \subseteq \Sigma^*$ ein begrenztes Vokabular mit $\Sigma^*$ als Menge möglicher Buchstabenketten, so dass im Falle einer gesprochenen Buchstabenfolge $\underline{s} \in V$ auch jedes Präfix der Buchstabenfolge $\underline{s}$ Element von V ist. $P_R$, $P_S$ und $f(\underline{s})$ sollen wie oben definiert sein. Weiterhin sei $\underline{r} \in \Sigma^*$ eine beliebige, aber feste Folge erkannter Buchstaben.

Eine (direkte) Möglichkeit zur Bestimmung der Folge $\underline{s}$ mit der größten Wahrscheinlichkeit ist die Berechnung aller Werte $f(\underline{s})$ für alle $\underline{s} \in V$, wobei die gesuchte Folge $\underline{s}$ diejenige ist, bei der $f(\underline{s})$ maximal ist. Zur Bewertung von $f(\underline{s})$ bietet sich eine leicht modifizierte Version der Methode der Dynamischen Programmierung (DP-Algorithmus) an.

Bei der Methode der dynamischen Programmierung wird zunächst ein Gitter mit $(n+1) \times (m+1)$ Punkten angesetzt, wobei im vorliegenden Ausführungsbeispiel n die Anzahl gesprochener Buchstaben und m die Anzahl erkannter Buchstaben ist. Die Zeilen des Gitters sind durch gesprochene Buchstaben und die Spalten des Gitters sind durch erkannte Buchstaben gekennzeichnet. Wie schon beim Gitter gemäß Fig. 2 sind die erste Zeile und die erste Spalte des Gitter nicht gekennzeichnet. Jedem durch ein Koordinatenpaar $(i, j)$ mit $i = 0, ..., n$ und $j = 0, ..., m$ gekennzeichneten Gitterpunkt ist eine Wahrscheinlichkeit $p_{ij}$ zugeordnet, die die Wahrscheinlichkeit dafür angibt, dass die Buchstabenfolge $s_1, ..., s_i$ eine Folge gesprochener Buchstaben (hier insbesondere ein Präfix eines eingegebenen Wortes, d.h. eine Folge aus mindestens einem Buchstaben, mit der das Wort beginnt) und dass $r_1, ..., r_j$ eine entsprechende zugehörige Folge erkannter Buchstaben ist. Der DP-Algorithmus ist eine Methode, um die Wahrscheinlichkeiten $p_{ij}$ spaltenweise zu berechnen. Dabei wird die 0-te Spalte in jeder Zeile mit einer 1 initialisiert. Die Spalte $i+1$ wird für $i = 0, ..., n-1$ aus der Spalte i bestimmt gemäß

$$p_{i+1,0} = p_{i,0}\, P_R(\varepsilon \mid s_{i+1})\, P_S(s_{i+1} \mid s_1, ..., s_i)$$

und

$$\begin{aligned} p_{i+1,j+1} = \;& p_{i+1,j}\, P_R(r_{j+1}, \varepsilon) \\ & + p_{i,j}\, P_R(r_{j+1} \mid s_{i+1})\, P_S(s_{i+1} \mid s_1, ..., s_i) \\ & + p_{i,j+1}\, P_R(\varepsilon \mid s_{i+1})\, P_S(s_{i+1} \mid s_1, ..., s_i) \end{aligned}$$

für $j = 0, ..., m-1$.

Hieraus ergibt sich durch Vergleich mit der oben angegebenen (und eine Produkt- und Summenbildung enthaltenden) Formel für $P_R(\underline{r} \mid \underline{s})$ die gesuchte Funktion $f(\underline{s})$ gemäß

$$f(\underline{s}) = p_{n,m}\, P_S(\$ \mid \underline{s}).$$

Beginnen zwei Buchstabenfolgen $\underline{s}_1$ und $\underline{s}_2$ mit der gleichen Buchstabenfolge $\underline{s}$ der Länge n, sind die ersten n Spalten des dem DP-Algorithmus zugrundegelegten Gitters identisch. Um dementsprechende redundante Berechnungen zu vermeiden, wird die folgende Modifikation vorgeschlagen: Die Spalten des DP-Gitters (eines dem DP-Algorithmus zugrundeliegenden Gitters) werden als Knoten eines Baumes definiert. Jeder Baumpfad entspricht nun einem DP-Gitter und Baumpfade mit einem identischen Anfangssegment entsprechen zwei DP-Gittern für die Buchstabenfolgen $\underline{s}_1$ und $\underline{s}_2$ mit gleicher Anfangsbuchstabenfolge (anders ausgedrückt: gleichem Präfix). Fig. 3 verdeutlicht diesen Ansatz und zeigt die dem Beispiel gemäß Fig. 1 entsprechende Baumstruktur. Im dargestellten Beispiel wurden zwei Buchstaben erkannt, so dass jedem Baumknoten drei DP-Gitterknoten (entsprechend einer DP-Gitterspalte) zugeordnet sind.

Im folgenden wird nun ein Ansatz beschrieben, der zeigt, dass nicht alle Knoten einer solchen Baumstruktur bewertet werden müssen, um das Maximum der Funktion $f(\underline{s})$ zu erhalten, und zwar unter Zuhilfenahme des sogenannten A*-Algorithmus.

Die Baumknoten werden nachstehend mit $t^{(1)}, t^{(2)}, ...$ bezeichnet. Der j-te Eintrag $(j = 0, ..., m)$ in der Gitterspalte, die dem Knoten $t^{(k)}$ zugeordnet ist, sei $t_j^{(k)}$. Weiterhin sei

$$t_{\$}^{(k)} = t_m^{(k)}\, P_S(\$ \mid \underline{s}),$$

wobei die Buchstabenfolge s die auf dem Pfad zum Knoten $t^{(k)}$ liegende Buchstabenfolge ist. Nun kann das Problem, die Folge gesprochener Buchstaben mit der größten Wahrscheinlichkeit zu finden, in einer abgewandelten Form formuliert werden, und zwar als Suche nach dem Baumknoten $t^{(k)}$, für den der Wert $t_{\$}^{(k)}$ maximal ist.

Nach der Bewertung eines Baumknotens $t^{(k)}$ wird ein oberer Grenzwert $\tilde{t}^{(k)}$ geschätzt durch

$$\tilde{t}^{(k)} \geq \max_i \ \{t_\$^{(l)} \mid t^{(l)} \text{ ist Nachfolgeknoten von } t^{(k)} \} \ .$$

Nach der Bewertung zweier Baumknoten $t^{(k)}$ und $t^{(k')}$ und bei Vorliegen der Bedingung

$$\tilde{t}^{(k)} < t_\$^{(k')}$$

weiß man bereits, dass kein Nachfolgebaumknoten des Baumknotens $t^{(k)}$ ein optimaler Baumknoten sein kein kann. Eine Bewertung solcher Nachfolgebaumknoten erübrigt sich somit und wird nicht durchgeführt.

Zur Berechnung des Grenzwert $\tilde{t}^{(k)}$ wird der der sogenannte A* -Algorithmus angewendet.

Die hier wesentlichen Iterationsschritte des an sich bekannten A*-Algorithmus (siehe beispielsweise E.G. Schukat-Talamazzini, "Automatische Spracherkennung", Vieweg-Verlag, 1995, Kapitel 8.2.1) sind:

(1) Initialisierung:

Bewertung des Baumwurzelknotens.

(2) Iteration:

E sei ein Satz schon bewerteter Knoten.

Es gelte: $p = \max \{t_\$ \mid t \in E \}$.

Es gelte: $\tilde{p} = \max \{\tilde{t} \mid t \in E \}$.

(3) Überprüfung, ob das Beendigungskriterium erfüllt ist:

Für $p \geq \tilde{p}$ : Ende des Algorithmus (keine weiteren Iterationsschritte notwendig). Der optimale Baumknoten ist der Knoten $t \in E$, für den $t_\$$ maximal ist.

(4) Expansions des Baums:

Es wird ein bisher nicht expandierter Baumknoten $t \in E$ ausgewählt und expandiert, was eine Bewertung aller seiner Tochterknoten beinhaltet. Danach wird nun der Algorithmus mit Schritt (2) fortgesetzt.

Zu beachten ist, dass in Schritt (4) grundsätzlich Freiheit in der Auswahl eines Knotens $t \in E$ besteht. Um eine größtmögliche Effizienz des Algorithmus zu gewährleisten, ist es allerdings anzustreben, an dieser Stelle den Baumknoten zu wählen, der die größte Wahrscheinlichkeit besitzt, Teil des Pfades zum optimalen Baumknoten zu sein.

Demgemäß wird hier derjenige Baumknoten $t \in E$ gewählt, für den das Maximum $\max_j \{t_j\}$ maximal ist, d.h. es wird der Baumknoten $t \in E$ gewählt, der den meistwahrscheinlichen bereits bewerteten Gitterpunkt aufweist.

Nun soll näher darauf eingegangen werden, wie der Wert für $\tilde{t}^{(k)}$ zu ermitteln ist. Grundsätzlich bestehen viele Möglichkeiten, diesen Wert zu bestimmen. Als eine vorteilhafte Möglichkeit der Bestimmung von $\tilde{t}^{(k)}$ - bei der der Rechenaufwand gering gehalten wird und überflüssige Iterationsschritte vermieden werden - wird folgendes vorgeschlagen:

Es sei

$$\hat{j} = \arg \max_{j=0,\dots,m} \{ t_j^{(k)} \}$$

und

$$c_j = \max \{ P_R (r_j | s) \ | \ s \in \textstyle\sum \}$$

für $j = \hat{j}\,n + 1, \dots, m$. Der gesuchte Wert von $\tilde{t}^{(k)}$ ergibt sich dann zu

$$\tilde{t}^{(k)} = \max \begin{Bmatrix} t_m^{(k)}, \\ t_{m-1}^{(k)}\, c_m, \\ t_{m-2}^{(k)}\, c_m\, c_{m-1}, \\ \vdots \\ t_{\hat{j}}^{(k)}\, c_m\, c_{m-1} \cdots c_{\hat{j}+1} \end{Bmatrix} .$$

Die Berechnung dieses Ausdrucks für $\tilde{t}^{(k)}$ ist mit wenig zusätzlichem Rechenaufwand verbunden, denn die Produkte $c_m$, $c_m c_{m-1}$, ... können vorab berechnet werden und der Minimum-Index $\hat{j}$ wird ohnehin in Schritt (4) des A*-Algorithmus bestimmt.

Eine weitere Ausführungsvariante ergibt sich, wenn der A*-Algorithmus beim erstmaligen Erfüllen der Bedingung im Schritt (3) nicht gestoppt, sondern weitere Algorithmus-Schleifen durchlaufen und weitere suboptimale Baumpfade ermittelt werden. Dann wird entsprechend N-1 weiteren durchlaufenen Schleifen statt einer einzigen Hypothese für die Folge gesprochener Buchstaben eine Liste N bester Hypothesen ausgegeben, und zwar diejenigen, die am wahrscheinlichsten die Folge der gesprochenen Buchstaben widergeben.

Der oben beschriebene Algorithmus garantiert das Finden des optimalen Baumknotens und damit der optimalen Schätzung der eingegebenen Buchstabenfolge s ; er ist allerdings rechenzeitintensiv und benötigt viel Speicherplatz. Im folgenden soll erläutert werden, wie die Rechenzeit und der Speicherplatzbedarf verringert werden können. Bei dem entsprechend modifizierten A*-Algorithmus werden lediglich die offenen Baumknoten gespeichert, d.h. die Baumknoten, die schon bewertet, aber noch nicht expandiert wurden. Nach der Expansion eines Baumknotens wird dieser im Speicher gelöscht. Die maximale Anzahl zu speichernder offener Baumknoten wird a priori vorgegeben. Liegt die Anzahl offener Baumknoten über dieser vorgegebenen maximalen Anzahl, ist demgemäß zu ermitteln, welche dieser offenen Baumknoten bei der nachfolgenden Berechnung außer Betracht bleiben können (sogenanntes "pruning"), wobei diese Knoten nicht zum optimalen Baumpfad gehören dürfen, da ansonsten der A*-Algorithmus ein falsches Ergebnis liefern würde. Es stellt sich also hier das Problem, diejenigen Baumknoten zu finden, die mit der größten Wahrscheinlichkeit nicht Teil des optimalen Baumpfades sind. Zur Lösung dieses Problems wird ein einfacher heuristischer Ansatz gewählt. Dabei werden diejenigen offenen Baumknoten vorrangig als außer Betracht zu bleibende Baumknoten gewählt, die am nächsten zur Baumwurzel liegen. Dies bedeutet, dass Suchpfade, die schon zu Beginn eine kleine Wahrscheinlichkeit aufweisen, diejenigen Baumpfade sind, die vorrangig als nicht mehr weiterzuverfolgende Pfade eingestuft werden.

Die beschriebene "pruning"-Stragegie kann effizient insbesondere dadurch implementiert werden, dass die offenen Knoten nicht in einer gemeinsamen Halde ("heap") gespeichert werden, sondern für jede Pfadlänge einer Halde vorgesehen ist und die offenen Knoten in der jeweils zugehörigen Halde gespeichert werden. Im Fall einer Überschreitung der zulässigen Anzahl offener Knoten (s.o.) wird bei dieser Form der Implementierung diejenige Halde, die den kürzesten Baumpfad repräsentiert, gelöscht. Die hierfür erforderliche Zeitspanne ist nahezu konstant.

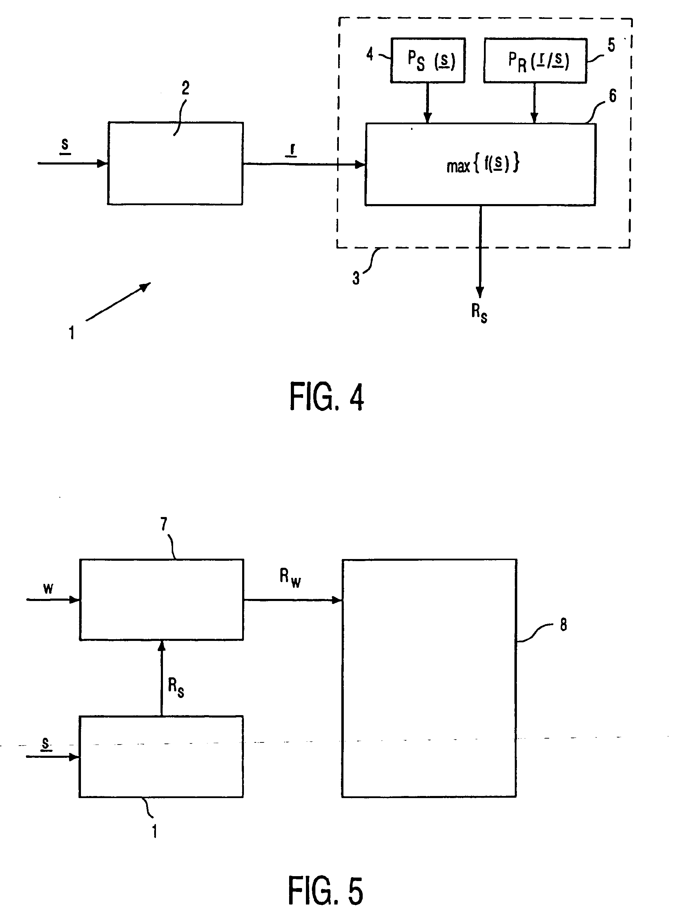

Fig. 4 zeigt ein Blockschaltbild eines Spracherkennungssystems 1 zur Erkennung eingegebener buchstabierter sprachlicher Äußerungen s, dass gemäß den obigen Ausführungen zur erfindungsgemäßen Buchstaben-Spracherkennung arbeitet. Ein Block 2 kennzeichnet eine Spracherkennungseinheit, die basierend auf akustischen Modellen - wie üblich werden HMM (Hidden Markov Modelle) verwendet - ein Erkennungsergebnis r (Folge von Buchstaben) liefert, wobei eine Buchstabengrammatik, die Wahrscheinlichkeiten für das Auftreten verschiedener möglicher Buchstabenkombinationen angibt, durch die Spracherkennungseinheit 2 nicht verwendet wird. Das Erkennungsergebnis r wird einer Nachverarbeitungseinheit 3 zugeführt, die basierend auf durch einen Block 4 dargestellten statistischen Modellen für Buchstabenfolgen $P_S(\underline{s})$ und auf mit einen Block 5 dargestellten statistischen Modellen $P_R(r \mid \underline{s})$ für den Spracherkenner wie oben beschrieben die entsprechende Funktion $f(\underline{s})$ maximiert (Block 6) und hieraus ein auszugebendes Erkennungsergebnis $R_S$ ableitet. Das Erkennungsergebnis $R_S$ ist entweder eine Schätzung der eingegebenen Buchstabenfolge $\underline{s}$ oder eine Liste N bester Schätzungen der eingegebenen Buchstabenfolge $\underline{s}$ mit den größten Wahrscheinlichkeiten, die richtige Schätzung zu sein.

Das in Fig. 5 dargestellte Blockschaltbild zeigt ein System mit Sprachsteuerung - hier vorzugsweise ein Navigationssystem für Landkraftfahrzeuge -, das sowohl einen Buchstabenspracherkenner 1 gemäß Fig. 4 als auch einen Wort-Spracherkenner 7 zur Erkennung eingegebner Worte w aufweist. Zur Anwendung der Erfindung kommen aber prinziell alle sprachgesteuerten Systeme mit Funktionseinheiten zur Erkennung buchstabierter Sprachäußerungen in Betracht. Das vom Buchstaben-Spracherkenner 1 gelieferte Erkennungsergebnis $R_S$ wird zur Einschränkung des Vokabulars des Wort-Spracherkenners 7, d.h. zur Begrenzung der als Wort-Erkennungsergebnis $R_W$ in Frage kommenden Worte, verwendet, was zu einer robusteren Wort-Spracherkennung führt. Bei einer bestimmten Anfangsbuchstabenfolge oder N bester Anfangsbuchstabenfolgen als Erkennungsergebnis $R_S$ wird das Vokabular des Wort-Spracherkenners 7 auf die Worte mit diesen Anfangsbuchstabenfolgen eingeschränkt. Das Erkennungsergebnis $R_W$ wird zur Systemsteuerung verwendet, wobei die gesteuerten Systemfunktionseinheiten durch einen Block 8 zusammengefasst sind. Bei Navigationssystemen stellt das Erkennungsergebnis beispielsweise einen Ortsnamen dar, dessen Eingabe das Navigationssystem zur Ermittlung einer dorthin führenden Fahrstrecke veranlasst.

Vorliegend werden der Spracherkennungsblock 2 und die Nachverarbeitungseinheit 3 mittels unterschiedlicher Hardware-Komponenten umgesetzt - der Spracherkennungsblock mittel eines für Spracherkennungsaufgaben angepassten digitalen Signalprozessors und die Nachverarbeitungseinheit 3 mittels eines auch zur Realisierung anderer durch Block 8 zusammengefasster Systemfunktionen dienenden Controllers. Dies hat den Vorteil, dass der Signalprozessor eine geringere Rechenkapazität und eine geringere Speicherkapazität aufweisen kann, da zur Erkennung eingegebener buchstabierter Sprachäußerungen sonst für Navigationsprozeduren vorgesehene Systemresourcen mitbenutzt werden.

**Patentansprüche**

1. Verfahren zur Erkennung einer in buchstabierter Form vorliegenden Sprachäußerungseingabe ($\underline{s}$) mit einer ersten Verarbeitungsstufe, in der mittels einer auf Hidden Markov Modellen basierenden Buchstaben-Spracherkennungseinheit (2) eine korrespondierende Buchstabenfolge ($r$) geschätzt wird, und mit einer zweiten Verarbeitungsstufe (3), in der unter Verwendung eines statistischen Buchstabenfolgemodells (4) und eines statistischen Modells (5) für die Spracherkennungseinheit (2) das von der erstenVerarbeitungsstufe gelieferte Schatzergebnis ($r$) nachverarbeitet wird, wobei bei der Nachverarbeitung die Methode der dynamischen Programmierung eingesetzt wird,
**dadurch gekennzeichnet,**
**dass** die der dynamischen Programmierung zugrundeliegende Gitterstruktur, deren Knotenpunkte zur Zuordnung zu akkumulierten Wahrscheinlichkeitswerten vorgesehen sind, in eine Baumstruktur umgesetzt wird und
**dass** bei der Suche nach einem optimalen Baumpfad der A'-Algorithmus eingesetzt wird.

2. Verfahren nach Anspruch 1,
**dadurch gekennzeichnet,**
**dass** suboptimale Baumpfade entsprechend N bester Schätzungen für die Sprachäußerungseingabe mit N> 1 ermittelt werden.

3. Verfahren nach Anspruch 1 oder 2,
**dadurch gekennzeichnet,**
**dass** bei der Suche nach einem optimalen Baumpfad diejenigen Baumpfade, die schon zu Beginn der Suche eine gegenüber anderen Baumpfaden eine kleine Wahrscheinlichkeit aufweisen, vorrangig nicht mehr weiterverfolgt werden.

4. Verfahren nach einem der Ansprüche 1 bis 3,
**dadurch gekennzeichnet,**
**dass** die erste Verarbeitungsstufe mittels eines ersten ICs und die zweite Verarbeitungsstufe mittels eines zweiten ICs durchgeführt wird.

5. Verfahren zur Systemsteuerung mittels Sprachsignalen (w, $\underline{s}$), bei dem

- eine Eingabe eines als Steuersignal dienenden ganzen Wortes (w) und eine Eingabe wenigstens eines Teils dieses Wortes in buchstabierter Form (s) vorgesehen ist,
- eine Wort-Spracherkennung (7) zur Erkennung des eingegebenen ganzen Wortes (w) vorgesehen ist,
- eine Buchstaben-Spracherkennung (1), nach einem der Ansprüche 1 bis 4, zur Erkennung des eingegebenen buchstabierten Teils (s) des ganzen Wortes (w) vorgesehen ist und
- bei dem mit Hilfe des Erkennungsergebnisses (s) der Buchstaben-Spracherkennung (1) eine Einschränkung eines der Wort-Spracherkennung (7) zugeordneten Vokabulars durchgeführt wird.

6. Sprachgesteuertes elektrisches Gerät, insbesondere Navigationssystem für Landkraftfahrzeuge, mit angepaßten Komponenten (1, 7, 8) zur Durchführung eines Verfahrens nach einem der Ansprüche 1 bis 5.

**Claims**

1. A method of recognizing a speech utterance (s) available in spelled mode, comprising a first processing stage in which a corresponding letter sequence (r) is estimated by means of a letter speech recognition unit (2) based on hidden Markov Models, and including a second processing stage (3) in which the estimated result (r) produced by the first processing stage utilizing a statistical letter sequence model (4) and a statistical model (5) for the speech recognition unit (2) is post-processed, while the dynamic programming method is used during the post-processing, **characterized in that** the grid structure on which the dynamic programming is based and whose node points are provided for the assignment to accumulated probability values, is converted into a tree structure and **in that** the A* algorithm is used for finding an optimum tree path.

2. A method as claimed in claim 1, **characterized in that** sub-optimum tree paths corresponding to N best estimates are determined for the speech utterance input with N>1.

3. A method as claimed in claim 1 or 2, **characterized in that** during the search for an optimum tree path those tree paths that already at the beginning of the search have a small probability compared to other tree paths are preferably no longer followed.

4. A method as claimed in any one of the claims 1 to 3, **characterized in that** the first processing stage is executed by means of a first IC and a second processing stage by means of a second IC.

5. A method of system control by means of speech signals (w,s) in which

- a whole word (w) serving as a control signal is input and at least part of this word is input in spelled mode (s),
- a word speech recognizer (7) is provided for recognizing the whole word (w) that is input,
- a letter speech recognizer (1), as claimed in one of the claims 1 to 4, is used for recognizing the spelled part (s) that is input of the whole word (w), and
- a vocabulary assigned to the word speech recognition (7) is restricted by the recognition result (s) of the letter speech recognition (1).

6. A speech-controlled electric device, more particularly, a navigation system for motorcars, comprising adapted components (1, 7, 8) for implementing a method as claimed in any one of the claims 1 to 5.

**Revendications**

1. Procédé de reconnaissance vocale d'une expression épelée (s) avec une première étape de traitement dans laquelle une séquence de lettres (r) correspondante est évaluée à l'aide d'une unité de reconnaissance vocale de lettres (2) basée sur des modèles de Markow cachés et avec une deuxième étape de traitement (3) dans laquelle le résultat de l'évaluation (r) délivré par la première étape de traitement est traité ultérieurement en utilisant un modèle statistique de séquence de lettres (4) et un modèle statistique (5) pour l'unité de reconnaissance vocale (2), la méthode de la programmation dynamique étant utilisée lors du traitement ultérieur,

**caractérisé en ce**
**que** la structure de grille à la base de la programmation dynamique dont les points de noeud sont prévus pour l'affectation à des valeurs de probabilité accumulées est convertie en une structure arborescente et
**que** l'algorithme A" est utilisé pour la recherche d'une voie arborescente optimale.

**2.** Procédé selon la revendication 1,
**caractérisé en ce**
**que** les voies arborescentes suboptimales sont déterminées en fonction des N meilleures estimations pour l'introduction d'expression vocale avec N>1.

**3.** Procédé selon l'une des revendications 1 ou 2,
**caractérisé en ce**
**que** pour la recherche d'une voie arborescente optimale, les voies arborescentes qui présentent déjà au début de la recherche une probabilité minime par rapport à d'autres voies arborescentes ne sont plus poursuivies prioritairement.

**4.** Procédé selon l'une des revendications 1 à 3,
**caractérisé en ce**
**que** la première étape de traitement est effectuée à l'aide d'un premier circuit imprimé et la deuxième étape de traitement à l'aide d'un deuxième circuit imprimé.

**5.** Procédé de commande de système à l'aide de signaux de parole (w, s) dans lequel :

- une introduction d'un mot complet (w) servant de signal de commande et une introduction d'au moins une partie de ce mot sous forme épelée (s) sont prévues ;
- une reconnaissance vocale de mots (7) est prévu pour la reconnaissance du mot complet (w) introduit ;
- une reconnaissance vocale de lettres (1) selon l'une des revendications 1 à 4 est prévue pour la reconnaissance de la partie épelée introduite (s) du mot complet (w), et
- dans lequel le résultat de la reconnaissance (s) du dispositif de reconnaissance vocale de lettres (1) permet une limitation d'un vocabulaire attribué à la reconnaissance vocale de mots (7).

**6.** Appareil électrique à commande vocale, en particulier système de navigation pour des véhicules terrestres, avec des composants adaptés (1, 7, 8) pour l'exécution d'un procédé selon l'une des revendications 1 à 5.

FIG. 1

FIG. 2

FIG. 3

$\underline{s}$

2

$\underline{r}$

4    $P_S(\underline{s})$      $P_R(\underline{r}/\underline{s})$    5

6

$\max\{f(\underline{s})\}$

3

$R_S$

1

FIG. 4

7

$w$      $R_W$

8

$R_S$

$\underline{s}$

1

FIG. 5